(19) Europäisches Patentamt / European Patent Office / Office européen des brevets

(11) EP 4 711 417 A1

# (12) EUROPEAN PATENT APPLICATION

published in accordance with Art. 153(4) EPC

(43) Date of publication:
**18.03.2026 Bulletin 2026/12**

(21) Application number: **24807052.6**

(22) Date of filing: **01.05.2024**

(51) International Patent Classification (IPC):
***C08L 67/00*** *(2006.01)* ***C08G 63/64*** *(2006.01)*
***C08K 5/10*** *(2006.01)* ***C08L 69/00*** *(2006.01)*
***G02B 1/04*** *(2006.01)*

(52) Cooperative Patent Classification (CPC):
**C08G 63/64; C08K 5/10; C08L 67/00; C08L 69/00; G02B 1/04**

(86) International application number:
**PCT/JP2024/016751**

(87) International publication number:
**WO 2024/237098 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 JP 2023078957**

(71) Applicant: **MITSUBISHI GAS CHEMICAL COMPANY, INC.**
**Chiyoda-ku**
**Tokyo 100-8324 (JP)**

(72) Inventors:
- **KATO, Noriyuki**
  **Tokyo 100-8324 (JP)**
- **NISHIMORI, Katsushi**
  **Tokyo 125-8601 (JP)**
- **MOTEGI, Atsushi**
  **Tokyo 125-8601 (JP)**
- **ISHIHARA, Kentaro**
  **Tokyo 100-8324 (JP)**
- **MURATA SUZUKI, Shoko**
  **Tokyo 125-8601 (JP)**
- **ARAI, Yuta**
  **Tokyo 125-8601 (JP)**
- **SUGA, Tatsuya**
  **Tokyo 125-8601 (JP)**

(74) Representative: **Hoffmann Eitle**
**Patent- und Rechtsanwälte PartmbB**
**Arabellastraße 30**
**81925 München (DE)**

## (54) POLYESTER CARBONATE RESIN COMPOSITION, AND OPTICAL LENS AND OPTICAL FILM USING SAME

(57) The present invention makes it possible to provide a polyester carbonate resin composition characterized by including: a polyester carbonate resin including a structural unit (A) that is represented by general formula (1), a structural unit (B) that is derived from at least one compound selected from the group consisting of 1,5-pentanediol, 1,6-hexanediol, 1,7-heptanediol, 1,8-octanediol, 1,10-decanediol, and 1,12-dodecanediol (C12-diol), and a structural unit (i) that is derived from a dicarboxylic acid or a carboxylic acid diester represented by general formula (I); and a higher alcohol fatty acid ester.

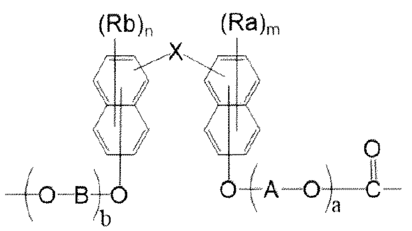

(1)

EP 4 711 417 A1

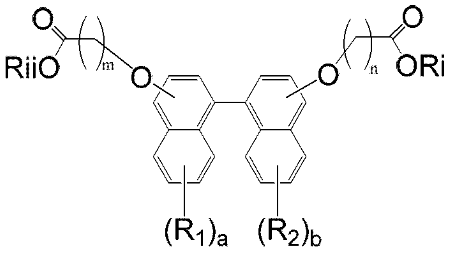

(I)

**Description**

TECHNICAL FIELD

The present invention relates to a novel polyester carbonate resin composition, and an optical lens and an optical film which are formed by using the same.

BACKGROUND ART

As a material of optical elements to be used in optical systems of various cameras such as cameras, film integrated type cameras and video cameras, an optical glass or an optical transparent resin is used. Optical glasses are excellent in heat resistance, transparency, size stability, chemical resistance, etc., and there are various materials with different refractive indexes (nD) or Abbe numbers (vD). However, optical glasses have problems of high material costs, bad molding processability and low productivity. In particular, significantly advanced techniques and high costs are required for processing for obtaining an aspherical lens to be used for aberration correction, and this is a major obstacle from a practical viewpoint.

Meanwhile, advantageously, optical lenses made of optical transparent resins, particularly thermoplastic transparent resins can be mass-produced by injection molding, and in addition, an aspherical lens can be easily produced therefrom. Such optical lenses are currently used for camera lenses. Examples thereof include a polycarbonate consisting of bisphenol A, polystyrene, poly-4-methylpentene, polymethyl methacrylate, and an amorphous polyolefin.

However, when using an optical transparent resin as an optical lens, in addition to the refractive index and Abbe number, transparency, heat resistance and low birefringence are also required, and therefore it has a weak point that portions for use thereof are limited depending on the balance of characteristics of the resin. For example, polystyrene has low heat resistance and high birefringence, poly-4-methylpentene has low heat resistance, polymethyl methacrylate has a low glass transition temperature, low heat resistance and a low refractive index, and therefore use areas of these materials are limited, and a polycarbonate consisting of bisphenol A has weak points such as high birefringence, and therefore portions for use thereof are limited, and thus these are not preferred.

Meanwhile, in general, when the refractive index of an optical material is high, a lens element having the same refractive index can be realized with a surface having a smaller curvature. Therefore, the amount of aberration generated on this surface can be reduced, and reduction in size and weight of a lens system can be realized by reduction in the number of lenses, reduction in the eccentricity sensitivity of the lens and reduction in the thickness of the lens. For this reason, it is useful to provide a high refractive index.

Further, regarding the optical design of optical units, it is known that chromatic aberration is corrected by combined use of a plurality of lenses with different Abbe numbers. For example, chromatic aberration is corrected by combined use of a lens made of an alicyclic polyolefin resin having an Abbe number of 45 to 60 and a lens made of a polycarbonate resin consisting of bisphenol A having a low Abbe number (nD=1.59, vD=29).

Among optical transparent resins which have been put to practical use in applications for optical lenses, examples of those having a high Abbe number include polymethyl methacrylate (PMMA) and cycloolefin polymer. In particular, cycloolefin polymer has excellent heat resistance and mechanical characteristics and therefore has been widely used in applications for optical lenses.

Examples of resins having a low Abbe number include polyester and polycarbonate. For example, the resin described in Patent Document 1 is characterized in that it has a high refractive index and a low Abbe number.

There is a difference between the hygroscopic expansion coefficient of a cycloolefin polymer having a high Abbe number and the hygroscopic expansion coefficient of a polycarbonate resin that is a polymer having a low Abbe number. When forming a lens unit by combining these two types of lenses, the difference between the sizes of the lenses is made at the time of water absorption depending on an operating environment of a smartphone or the like. Due to the difference of the expansion rate, performance of the lens is impaired.

Patent Documents 2 to 4 describe polycarbonate copolymers containing a perhydroxy dimethanonaphthalene skeleton, but since the dihydroxymethyl group is positioned at 2,3-position in each case, the strength is low, and therefore these materials are not suitable for use in optical lenses. In addition, the polycarbonates described in

Patent Documents 2 to 4 have a low glass transition temperature (Tg), and accordingly have a problem in terms of heat resistance. For example, the HOMO polycarbonate described in Example 1 of Patent Document 4 has a number-average molecular weight of 38000, but the glass transition temperature (Tg) thereof is low (125°C).

PRIOR ART DOCUMENTS

PATENT DOCUMENTS

Patent Document 1: International Publication WO2014/73496 pamphlet
Patent Document 2: Japanese Laid-Open Patent Publication No. H05-70584
Patent Document 3: Japanese Laid-Open Patent Publication No. H02-69520
Patent Document 4: Japanese Laid-Open Patent Publication No. H05-341124

SUMMARY OF THE INVENTION

PROBLEMS TO BE SOLVED BY THE INVENTION

The present invention addresses the problem of solving at least one of the above-described conventional problems. Further, a preferred aspect of the present invention addresses the problem of providing a polyester carbonate resin composition that is excellent in at least one of the dimensional change rate (%), water absorption rate (%), YI, haze (%), and transmittance (%). Moreover, a preferred aspect of the present invention addresses the problem of providing an optical lens and an optical film which are produced from the resin composition.

MEANS FOR SOLVING THE PROBLEMS

The present inventors diligently made researches in order to solve the above-described problems and found that a resin composition, which includes a polyester carbonate resin that is obtained by using a specific combination of diol compounds as raw materials and a higher alcohol fatty acid ester, can solve the above-described problems, and thus the present invention was achieved.

Specifically, the present invention is as follows:

<1> A polyester carbonate resin composition, which comprises:

a polyester carbonate resin comprising

a structural unit (A) that is represented by general formula (1),
a structural unit (B) that is derived from at least one compound selected from the group consisting of 1,5-pentanediol, 1,6-hexanediol, 1,7-heptanediol, 1,8-octanediol, 1,10-decanediol, and 1,12-dodecanediol (C12-diol), and
a structural unit (i) that is derived from a dicarboxylic acid or a carboxylic acid diester represented by general formula (I); and

a higher alcohol fatty acid ester:

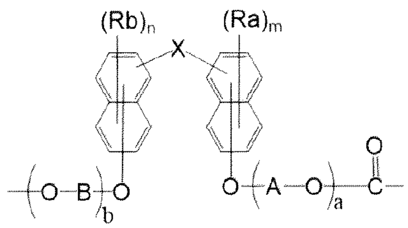 (1)

wherein in formula (1):

X represents a single bond or a fluorene group;
when X is a single bond, $R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C \equiv C-R_h$;
when X is a fluorene group, $R_a$ and $R_b$ are each independently selected from a hydrogen atom; a halogen atom; an alkyl group having 1 to 20 carbon atoms; an alkoxyl group having 1 to 20 carbon atoms; a cycloalkyl

group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and -C≡C-$R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10,

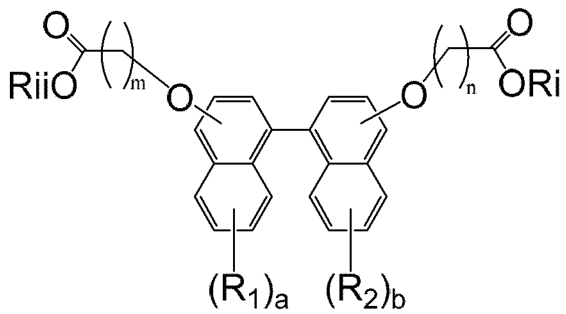

(I)

wherein in formula (I):

$R_1$ and $R_2$ each independently represent a hydrogen atom; a fluorine atom; a chlorine atom; a bromine atom; an iodine atom; an alkyl group having 1 to 6 carbon atoms; or an aryl group having 6 to 20 carbon atoms, an alkenyl group having 2 to 6 carbon atoms, an alkoxy group having 1 to 6 carbon atoms, or an aralkyl group having 7 to 17 carbon atoms, which may contain a heterocyclic atom selected from O, N and S;
a and b each independently represent an integer of 0 to 5;
n and m each independently represent an integer of 1 to 5; and
$R_i$ and $R_{ii}$ each independently represent a hydrogen atom, or an alkyl group having 1 to 5 carbon atoms.

<2> The polyester carbonate resin composition according to item <1>, wherein the molar ratio between the structural unit (A) and the structural unit (B) (A/B) is 99.9/0.1 to 0.1/99.9.
<3> The polyester carbonate resin composition according to item <1> or <2>, wherein the polyester carbonate resin further comprises a structural unit (C) represented by general formula (3):

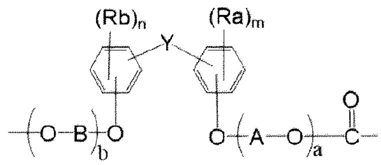

(3)

wherein in formula (3):

$R_a$ and $R_b$ each independently represent a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, or an aryl group having 6 to 20 carbon atoms;
Y represents -O-, -S-, -SO-, -$SO_2$-, -CO-, a cycloalkylene group having 6 to 12 carbon atoms, or a divalent group represented by general formula (4) or general formula (5), and the cycloalkylene group may be substituted with 1 to 12 alkyl groups having 1 to 3 carbon atoms;
A and B each independently represent an alkylene group having 1 to 4 carbon atoms;
m and n each independently represent an integer of 0 to 4; and
a and b each independently represent an integer of 1 to 10,

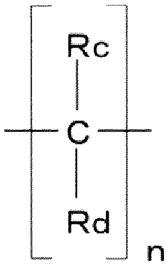

(4)

wherein in formula (4):

$R_c$ and $R_d$ are each independently selected from the group consisting of a hydrogen atom, a halogen atom, an alkyl group having 1 to 20 carbon atoms, an alkoxy group having 1 to 5 carbon atoms, an aryl group having 6 to 12 carbon atoms, an aralkyl group having 7 to 17 carbon atoms, and an alkenyl group having 2 to 15 carbon atoms;
each of the alkyl group, the alkoxy group, the aryl group, the aralkyl group and the alkenyl group of $R_c$ and $R_d$ may have a substituent, and $R_c$ and $R_d$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent; and
n represents an integer of 0 to 20,

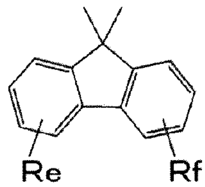

(5)

wherein in formula (5):

$R_e$ and $R_f$ are each independently selected from the group consisting of a hydrogen atom, a halogen atom, an alkyl group having 1 to 20 carbon atoms, an alkoxy group having 1 to 7 carbon atoms, an aryl group having 6 to 12 carbon atoms, an aralkyl group having 7 to 17 carbon atoms, and an alkenyl group having 2 to 15 carbon atoms,

and each of the alkyl group, the alkoxy group, the aryl group, the aralkyl group, and the alkenyl group may have a substituent; and
$R_e$ and $R_f$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent.

<4> The polyester carbonate resin composition according to item <3>, wherein Y in general formula (3) is a fluorene group.
<5> The polyester carbonate resin composition according to any one of items <1> to <4>, wherein the polyester carbonate resin further comprises a structural unit (D) represented by general formula (6):

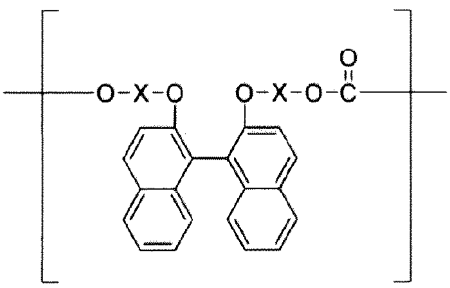

(6)

wherein in formula (6), X represents an alkylene group having 1 to 4 carbon atoms.

<6> The polyester carbonate resin composition according to any one of items <1> to <5>, wherein a monomer constituting the structural unit (A) represented by general formula (1) comprises at least one of monomers represented by structural formulae below:

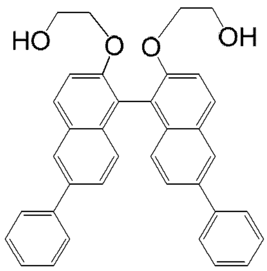

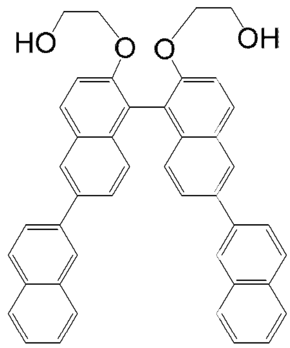

DPBHBNA 2DNBINOL-2EO

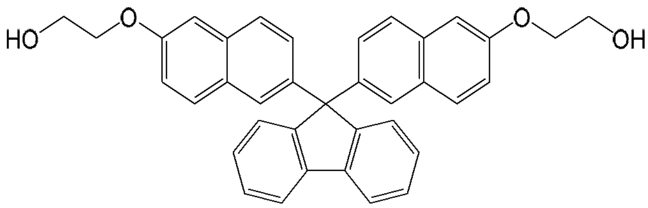

BNEF

<7> The polyester carbonate resin composition according to any one of items <1> to <6>, wherein the dicarboxylic acid or the carboxylic acid diester represented by general formula (I) comprises at least one of a dicarboxylic acid and a carboxylic acid diester represented by structural formulae below:

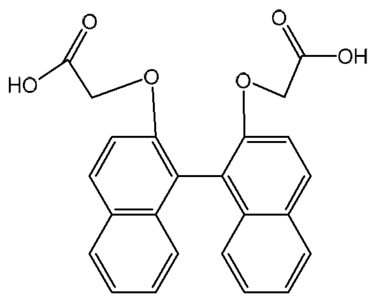

BINOL-DC

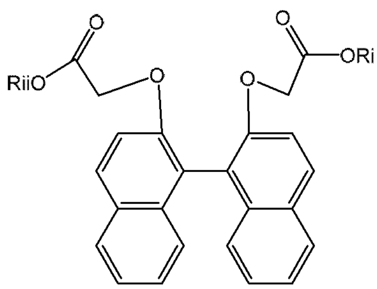

wherein in formulae, $R_i$ and $R_{ii}$ each independently represent an alkyl group having 1 to 5 carbon atoms.

<8> The polyester carbonate resin composition according to item <3> or <4>, wherein a monomer constituting the structural unit (C) represented by general formula (3) comprises at least one of monomers represented by structural formulae below:

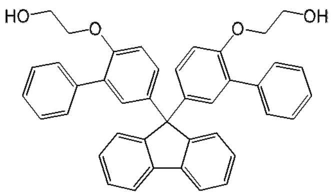

BPPEF

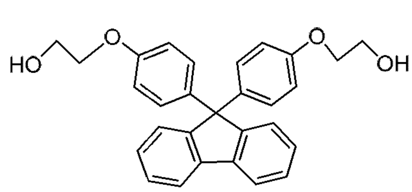

BPEF

<9> **The polyester** carbonate resin composition according to item <5>, wherein a monomer constituting the structural unit (D) represented by general formula (6) is a monomer represented by structural formula below:

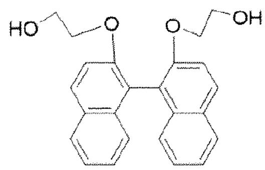

BNE

<10> An optical lens comprising the polyester carbonate resin composition according to any one of items <1> to <9>.
<11> An optical film comprising the polyester carbonate resin composition according to any one of items <1> to <9>.

ADVANTAGEOUS EFFECT OF THE INVENTION

According to a preferred aspect of the present invention, it is possible to obtain a polyester carbonate resin composition that is excellent in at least one of the dimensional change rate (%), water absorption rate (%), YI, haze (%), and transmittance (%). Moreover, it is possible to obtain an optical lens and an optical film which are produced from the resin composition.

EMBODIMENTS FOR CARRYING OUT THE INVENTION

(A) Polyester Carbonate Resin

The polyester carbonate resin composition of the present invention includes: a polyester carbonate resin including a structural unit (A) that is represented by general formula (1), a structural unit (B) that is derived from at least one compound selected from the group consisting of 1,5-pentanediol, 1,6-hexanediol, 1,7-heptanediol, 1,8-octanediol, 1,10-decanediol, and 1, 12-dodecanediol (C12-diol), and a structural unit (i) that is derived from a dicarboxylic acid or a carboxylic acid diester represented by general formula (I); and a higher alcohol fatty acid ester.

In one embodiment of the present invention, the polyester carbonate resin may include one type of a material represented by general formula (1) alone, or a combination of two or more types of materials represented by general formula (1).

<Structural Unit (A)>

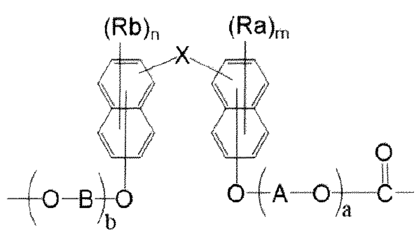

(1)

In formula (1):

X represents a single bond or a fluorene group;

when X is a single bond, $R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C\equiv C-R_h$;

when X is a fluorene group, $R_a$ and $R_b$ are each independently selected from a hydrogen atom; a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C\equiv C-R_h$;

$R_h$ represents an aryl group having 6 to 20 carbon atoms, or a heteroaryl group having 6 to 20 carbon atoms which contains at least one heterocyclic atom selected from O, N and S;

A and B each independently represent an alkylene group having 1 to 4 carbon atoms;

m and n each independently represent an integer of 1 to 6; and

a and b each independently represent an integer of 0 to 10.

In a preferred embodiment of the present invention, in formula (1), $R_a$ and $R_b$ are each independently selected from an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C\equiv C-R_h$, and $R_h$ represents an aryl group having 6 to 20 carbon atoms, or a heteroaryl group having 6 to 20 carbon atoms which contains at least one heterocyclic atom selected from O, N and S.

The aryl group more preferably has 6 to 18 carbon atoms, even more preferably has 6 to 16 carbon atoms, still more preferably has 6 to 14 carbon atoms, yet more preferably has 6 to 12 carbon atoms, and still even more preferably has 6 to 10 carbon atoms.

The heteroaryl group more preferably has 6 to 18 carbon atoms, even more preferably has 8 to 16 carbon atoms, and still more preferably has 10 to 14 carbon atoms.

The aryloxy group more preferably has 6 to 18 carbon atoms, even more preferably has 6 to 16 carbon atoms, and still more preferably has 6 to 14 carbon atoms.

Further, in a preferred embodiment of the present invention, in formula (1), when X is a single bond, $R_a$ and $R_b$ may be each independently selected from a phenyl group, a naphthyl group, or the group consisting of the following, and when X is a fluorene group, $R_a$ and $R_b$ may be each independently selected from a hydrogen atom, a phenyl group, a naphthyl group, or the group consisting of the following:

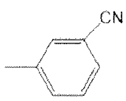 、 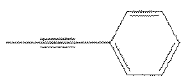 、 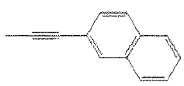 、 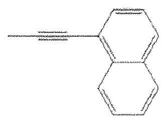

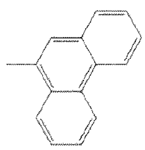 、 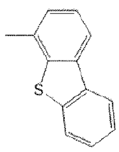 、 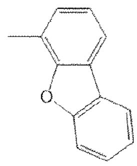

In the present invention, an aspect in which a monomer constituting the structural unit (A) represented by general formula (1) includes at least one of monomers represented by structural formulae below is preferred.

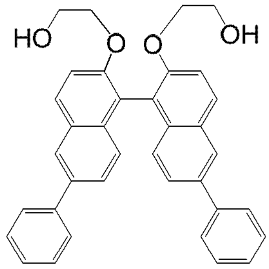

DPBHBNA

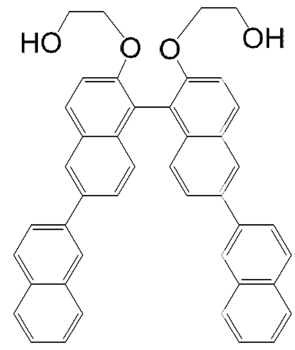

2DNBINOL-2EO

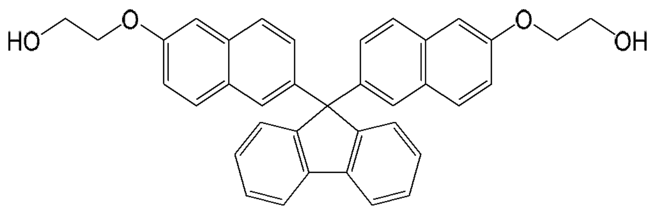

BNEF

<Structural Unit (B)>

In one embodiment of the present invention, a monomer constituting the structural unit (B) is at least one compound selected from the group consisting of 1,5-pentanediol, 1,6-hexanediol, 1,7-heptanediol, 1,8-octanediol, 1,10-decanediol, and 1,12-dodecanediol (C12-diol).

<Structural Unit (C)>

Further, in the present invention, the polyester carbonate resin may further include a structural unit (C) represented by general formula (3):

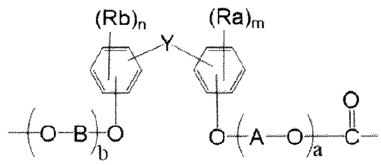

(3)

In formula (3):

$R_a$ and $R_b$ each independently represent a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, or an aryl group having 6 to 20 carbon atoms;
Y represents -O-, -S-, -SO-, $-SO_2-$, -CO-, a cycloalkylene group having 6 to 12 carbon atoms, or a divalent group represented by general formula (4) or general formula (5), and the cycloalkylene group may be substituted with 1 to 12 alkyl groups having 1 to 3 carbon atoms;
A and B each independently represent an alkylene group having 1 to 4 carbon atoms;
m and n each independently represent an integer of 0 to 4; and
a and b each independently represent an integer of 1 to 10.

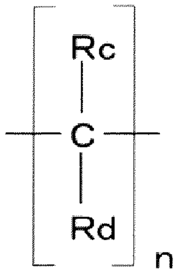

(4)

In formula (4),

$R_c$ and $R_d$ are each independently selected from the group consisting of a hydrogen atom, a halogen atom, an alkyl group having 1 to 20 carbon atoms (preferably 1 to 5 carbon atoms), an alkoxy group having 1 to 5 carbon atoms (preferably 1 to 3 carbon atoms), an aryl group having 6 to 12 carbon atoms (preferably 6 to 8 carbon atoms), an aralkyl group having 7 to 17 carbon atoms (preferably 7 to 10 carbon atoms), and an alkenyl group having 2 to 15 carbon atoms (preferably 2 to 10 carbon atoms), and preferably selected from the group consisting of a hydrogen atom, a methyl group, an ethyl group, an isopropyl group, an isobutyl group, and a phenyl group. More preferably, both $R_c$ and $R_d$ represent a methyl group.

Each of the alkyl group, the alkoxy group, the aryl group, the aralkyl group and the alkenyl group of $R_c$ and $R_d$ may have a substituent.

$R_c$ and $R_d$ may be bonded to each other so as to form a carbocyclic ring having 3 to 20 carbon atoms (preferably 5 to 15 carbon atoms) or a heterocyclic ring having 1 to 20 carbon atoms (preferably 5 to 10 carbon atoms), and each of the carbocyclic ring and the heterocyclic ring may have a substituent. Preferred examples of the substituent include a cyclohexyl group, an adamantyl group, a cyclododecane group, and a norbornane group.

In general formula (4), n represents an integer of 0 to 20, preferably an integer of 0 to 5, and more preferably an integer of 0 to 2.

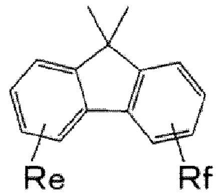

(5)

In formula (5),
$R_e$ and $R_f$ are each independently selected from the group consisting of a hydrogen atom, a halogen atom, an alkyl group having 1 to 20 carbon atoms (preferably 1 to 3 carbon atoms), an alkoxy group having 1 to 7 carbon atoms (preferably 1 to 3 carbon atoms), an aryl group having 6 to 12 carbon atoms (preferably 6 to 10 carbon atoms), an aralkyl group having 7 to 17 carbon atoms (preferably 7 to 11 carbon atoms), and an alkenyl group having 2 to 15 carbon atoms, and preferably selected from the group consisting of a hydrogen atom and a phenyl group. More preferably, both $R_e$ and $R_f$ represent a hydrogen atom.

Note that each of the alkyl group, the alkoxy group, the aryl group, the aralkyl group and the alkenyl group may have a substituent, and preferred examples of the substituent include a phenyl group.

$R_e$ and $R_f$ may be bonded to each other so as to form a carbocyclic ring having 3 to 20 carbon atoms (preferably 3 to 10 carbon atoms) or a heterocyclic ring having 1 to 20 carbon atoms (preferably 1 to 10 carbon atoms), and each of the carbocyclic ring and the heterocyclic ring may have a substituent.

In a preferred embodiment of the present invention, in formula (3), Y represents a divalent group represented by general formula (4) above or a divalent group represented by general formula (5) above. Further, in formula (3), Y is more preferably a fluorene group.

In the present invention, an aspect in which a monomer constituting the structural unit (C) represented by general formula (3) includes at least one of monomers represented by structural formulae below is preferred.

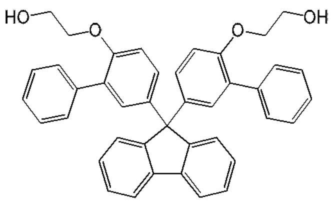

BPPEF

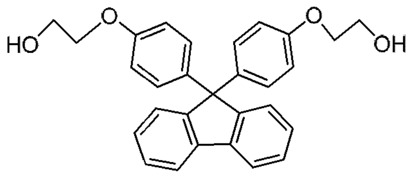

BPEF

<Structural Unit (D)>

Further, in the present invention, the polyester carbonate resin may further include a structural unit (D) represented by general formula (6).

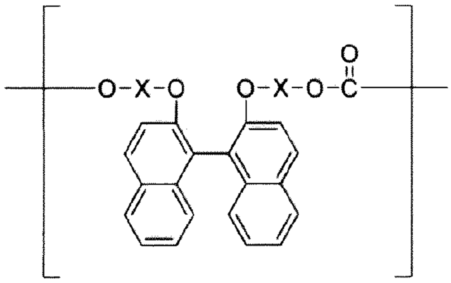

(6)

In formula (6), X represents an alkylene group having 1 to 4 carbon atoms.

In the present invention, an aspect in which a monomer constituting the structural unit (D) represented by general formula (6) is a monomer represented by structural formula below is preferred.

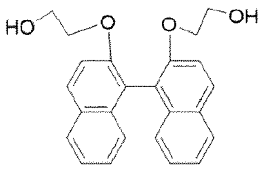

BNE

In the present invention, the polyester carbonate resin may include, for example, a combination of compounds shown in Table 1 below.

Table 1

| No. | Aromatic dihydroxy compound | | |
|---|---|---|---|
| | Structural unit (A) | Structural unit (C) | Structural unit (D) |
| 1 | Compound represented by formula (1-1) | - | - |
| 2 | Compound represented by formula (1-1) | Compound represented by formula (3-1) | - |
| 3 | Compound represented by formula (1-1) | - | Compound represented by formula (6) |
| 4 | Compound represented by formula (1-1) | Compound represented by formula (3-1) | Compound represented by formula (6) |
| 5 | Compound represented by formula (1-2) | - | - |
| 6 | Compound represented by formula (1-2) | Compound represented by formula (3-1) | - |

(continued)

| No. | Aromatic dihydroxy compound | | |
|---|---|---|---|
| | Structural unit (A) | Structural unit (C) | Structural unit (D) |
| 7 | Compound represented by formula (1-2) | - | Compound represented by formula (6) |
| 8 | Compound represented by formula (1-2) | Compound represented by formula (3-1) | Compound represented by formula (6) |
| 9 | Compound represented by formula (1-1) and Compound represented by formula (1-2) | - | - |
| 10 | Compound represented by formula (1-1) and Compound represented by formula (1-2) | Compound represented by formula (3-1) | - |
| 11 | Compound represented by formula (1-1) and Compound represented by formula (1-2) | - | Compound represented by formula (6) |
| 12 | Compound represented by formula (1-1) and Compound represented by formula (1-2) | Compound represented by formula (3-1) | Compound represented by formula (6) |

Hereinafter, the combinations of compounds shown in Table 1 will be described. In Table 1, No. 1 to No. 4 show cases in which a compound, wherein X in formula (1) is a single bond (hereinafter referred to as formula (1-1)), is included in the structural unit (A). Further, No. 5 to No. 8 show cases in which a compound, wherein X in formula (1) is a fluorene group (hereinafter referred to as formula (1-2)), is included in the structural unit (A). No. 9 to No. 12 show cases in which a compound represented by formula (1-1) and a compound represented by formula (1-2) are included in the structural unit (A).

Further, in Table 1, Nos. 2, 4, 6, 8, 10 and 12 show cases in which a compound, wherein Y in formula (3) is a fluorene group (hereinafter referred to as formula (3-1)), is included in the structural unit (C).

Hereinafter, the combinations will be individually described.

(No. 1)

In one embodiment of the present invention, the polyester carbonate resin may include a structural unit (A) represented by general formula (1-1) below and the aforementioned structural unit (B).

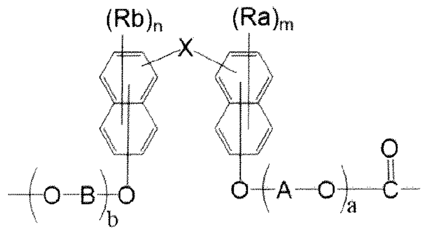

(1－1)

In formula (1-1):

X represents a single bond;
$R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and -C≡C-$R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10.

Further, the aforementioned general formula (1-1) may be represented by general formula (1-1A) below.

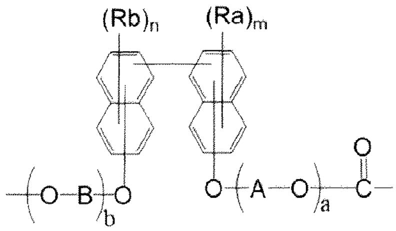

(1−1A)

In formula (1-1A):

$R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C{\equiv}C-R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10.

(No. 2)

In one embodiment of the present invention, the polyester carbonate resin may include the aforementioned structural unit (A) represented by general formula (1-1), the aforementioned structural unit (B), and a structural unit (C) represented by general formula (3-1) below.

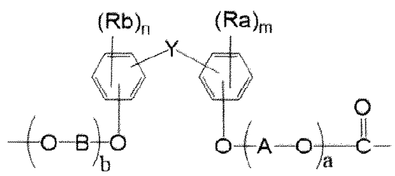

(3−1)

**In** formula (3-1):

$R_a$ and $R_b$ each independently represent a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, or an aryl group having 6 to 20 carbon atoms;
Y represents a fluorene group;
A and B each independently represent an alkylene group having 1 to 4 carbon atoms;
m and n each independently represent an integer of 0 to 4; and
a and b each independently represent an integer of 1 to 10.

(No. 3)

In one embodiment of the present invention, the polyester carbonate resin may include the aforementioned structural unit (A) represented by general formula (1-1), the aforementioned structural unit (B), and the aforementioned structural unit (D) represented by general formula (6).

(No. 4)

In one embodiment of the present invention, the polyester carbonate resin may include the aforementioned structural unit (A) represented by general formula (1-1), the aforementioned structural unit (B), the aforementioned structural unit (C) represented by general formula (3-1), and the aforementioned structural unit (D) represented by formula (6).

(No. 5)

In one embodiment of the present invention, the polyester carbonate resin may include a structural unit (A) represented by general formula (1-2) below and the aforementioned structural unit (B).

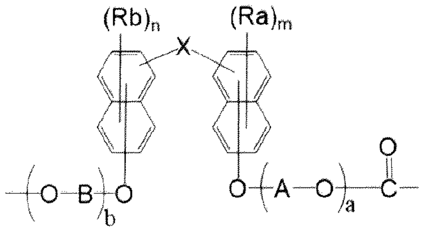

(1−2)

In formula (1-2):

X represents a fluorene group;
$R_a$ and $R_b$ are each independently selected from a hydrogen atom; a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C\equiv C-R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10.

Further, the aforementioned general formula (1-2) may be represented by general formula (1-2A) below.

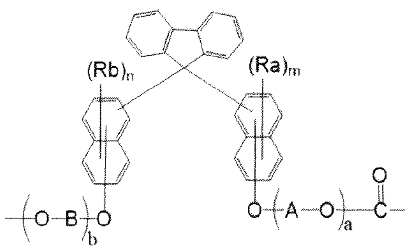

(1−2A)

In formula (1-2A):

$R_a$ and $R_b$ are each independently selected from a hydrogen atom; a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C\equiv C-R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10.

(No. 6)

In one embodiment of the present invention, the polyester carbonate resin may include the aforementioned structural unit (A) represented by general formula (1-2), the aforementioned structural unit (B), and the aforementioned structural unit (C) represented by general formula (3-1).

(No. 7)

In one embodiment of the present invention, the polyester carbonate resin may include the aforementioned structural unit (A) represented by general formula (1-2), the aforementioned structural unit (B), and the aforementioned structural unit (D) represented by general formula (6).

(No. 8)

In one embodiment of the present invention, the polyester carbonate resin may include the aforementioned structural unit (A) represented by general formula (1-2), the aforementioned structural unit (B), the aforementioned structural unit (C) represented by general formula (3-1), and the aforementioned structural unit (D) represented by formula (6).

(No. 9)

In one embodiment of the present invention, the polyester carbonate resin may include the aforementioned structural unit (A) represented by general formula (1-1) and general formula (1-2) and the aforementioned structural unit (B).

No. 10)

In one embodiment of the present invention, the polyester carbonate resin may include the aforementioned structural unit (A) represented by general formula (1-1) and general formula (1-2), the aforementioned structural unit (B), and the aforementioned structural unit (C) represented by general formula (3-1).

No. 11)

In one embodiment of the present invention, the polyester carbonate resin may include the aforementioned structural unit (A) represented by general formula (1-1) and general formula (1-2), the aforementioned structural unit (B), and the aforementioned structural unit (D) represented by general formula (6).

No. 12)

In one embodiment of the present invention, the polyester carbonate resin may include the aforementioned structural unit (A) represented by general formula (1-1) and general formula (1-2), the aforementioned structural unit (B), the aforementioned structural unit (C) represented by general formula (3-1), and the aforementioned structural unit (D) represented by formula (6).

The molar ratio between the structural unit (A) and the structural unit (B) (A/B) is preferably 99.9/0.1 to 0.1/99.9, more preferably 99/1 to 1/99, even more preferably 99/1 to 50/50, particularly preferably 99/1 to 60/40, and most preferably 90/10 to 70/30. By adjusting the molar ratio of the structural unit (B) to be larger than the above-described lower limit, the flowability of the polyester carbonate resin can be improved. Further, by adjusting the molar ratio of the structural unit (B) to be smaller than the above-described upper limit, optical characteristics of molded articles obtained by using the polyester carbonate resin in the present invention can be maintained within preferred ranges for optical materials.

<Structural Unit (i)>

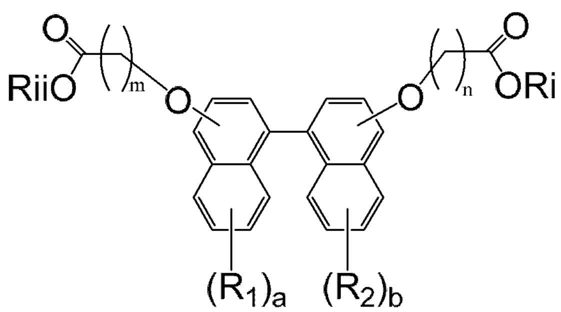

(I)

In formula (I):

$R_1$ and $R_2$ each independently represent a hydrogen atom; a fluorine atom; a chlorine atom; a bromine atom; an iodine atom; an alkyl group having 1 to 6 carbon atoms; or an aryl group having 6 to 20 carbon atoms, an alkenyl group having 2 to 6 carbon atoms, an alkoxy group having 1 to 6 carbon atoms, or an aralkyl group having 7 to 17 carbon atoms, which may contain a heterocyclic atom selected from O, N and S;
a and b each independently represent an integer of 0 to 5;
n and m each independently represent an integer of 1 to 5; and
$R_i$ and $R_{ii}$ each independently represent a hydrogen atom, or an alkyl group having 1 to 5 carbon atoms.

In the present invention, an aspect in which the dicarboxylic acid or the carboxylic acid diester represented by general formula (I) includes at least one of a dicarboxylic acid and a carboxylic acid diester represented by structural formulae below is preferred.

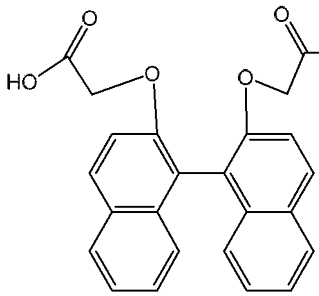

BINOL-DC

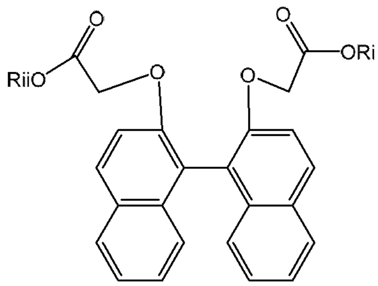

In formulae, $R_i$ and $R_{ii}$ each independently represent preferably an alkyl group having 1 to 5 carbon atoms, more preferably a methyl group or an ethyl group, and particularly preferably a methyl group.
In the present invention, regarding the molar ratio between the total amount of the diol components constituting the structural units (A) to (D) and the total amount of the dicarboxylic acid or the carboxylic acid diester constituting the structural unit (i), diol components:carboxylic acid components is preferably 90:10 to 10:90, more preferably 90:10 to 50:50, even more preferably 75:25 to 50:50, still more preferably 70:30 to 50:50, yet more preferably 65:35 to 50:50, and particularly preferably 60:40 to 50:50. Further, ranges such as 75:25 to 40:60 and 65:35 to 45:55 are also preferred.
In the polyester carbonate resin in the present invention, a phenol generated at the time of the production and a carbonic acid diester which is unreacted and remains may be present as impurities. The phenol content in the polyester carbonate resin is preferably 0.1 to 3000 ppm, more preferably 0.1 to 2000 ppm, and particularly preferably 1 to 1000 ppm, 1 to 800 ppm, 1 to 500 ppm, or 1 to 300 ppm. Further, the carbonic acid diester content in the polyester carbonate resin is preferably 0.1 to 1000 ppm, more preferably 0.1 to 500 ppm, and particularly preferably 1 to 100 ppm. By adjusting the amounts of the phenol and carbonic acid diester contained in the polyester carbonate resin, a resin having physical properties appropriate for purposes can be obtained. The adjustment of the phenol content and the carbonic acid diester content can be suitably carried out by changing conditions for polycondensation and apparatuses. The adjustment can also be carried out by changing conditions for the extrusion process after polycondensation.
When the content of the phenol or carbonic acid diester is more than the above-described ranges, it may cause problems such as reduction in the strength of a resin molded body obtained and generation of odor. Meanwhile, when the content of the phenol or carbonic acid diester is less than the above-described ranges, it may cause reduction in the plasticity of a resin at the time of melting.
Further, there is a case where raw material monomers remain in a resin. The amount of each raw material monomer remaining in the resin is preferably 3000 ppm or less, and more preferably 1 to 1000 ppm.

(B) Method for Producing Polyester Carbonate Resin

The polyester carbonate resin in the present invention can be produced by the melt polycondensation method using a diol compound constituting the structural unit (A), a diol compound constituting the structural unit (B), a dicarboxylic acid or carboxylic acid diester constituting the structural unit (i), and a carbonic acid diester as raw materials. Moreover, use in combination with another diol compound may be employed. The production can be carried out by this reaction in the presence of, as a polycondensation catalyst, a basic compound catalyst, a transesterification catalyst or a mixed catalyst made of these two catalysts.

Examples of the carbonic acid diester include diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Among them, diphenyl carbonate is particularly preferred from the viewpoint of the reactivity and the purity. Regarding the addition amount of the carbonic acid diester, assuming that the diol component and the dicarboxylic acid component react in equimolar amounts and the remainder reacts with the carbonic acid diester, the feed amount can be determined. The carbonic acid diester is used at a ratio of preferably 0.60 to 1.50 mol, more preferably 0.80 to 1.40 mol, even more preferably 1.00 to 1.30 mol, still more preferably 1.00 to 1.25 mol, and particularly preferably 1.00 to 1.20 mol relative to 1 mol of the difference between the amount of the diol component and the amount of the dicarboxylic acid component. By adjusting the molar ratio, the molecular weight of the polyester carbonate resin is controlled.

Examples of the basic compound catalyst include an alkali metal compound, an alkaline earth metal compound, and a nitrogen-containing compound.

Examples of the alkali metal compound to be used in the present invention include an organic salt, inorganic salt, oxide, hydroxide, hydride or alkoxide of an alkali metal, etc. From the viewpoint of the catalytic effect, price, distribution amount, influence on the color phase of resin, etc., sodium carbonate and sodium hydrogen carbonate are preferred.

Examples of the alkaline earth metal compound include an organic salt, inorganic salt, oxide, hydroxide, hydride or alkoxide of an alkaline earth metal compound, etc.

Examples of the nitrogen-containing compound include quaternary ammonium hydroxides and salts thereof, and amines.

As the transesterification catalyst, salts of zinc, tin, zirconium or lead are preferably used. These substances may be used solely, or two or more of them may be used in combination. Further, these substances may be used in combination with the above-described alkali metal compound or alkaline earth metal compound.

As the transesterification catalyst, tris(2,4-pentanedionato)aluminum(III), diethyl (4-methylbenzyl)phosphonate, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonato, zirconium oxyacetate, zirconium tetrabutoxide, lead(II) acetate, lead(IV) acetate, zirconium acetate, titanium tetrabutoxide or the like is specifically used. Among them, zinc acetate, zirconium acetate, tris(2,4-pentanedionato)aluminum(III), and diethyl (4-methylbenzyl)phosphonate are preferred, and tris(2,4-pentanedionato)aluminum(III) and diethyl (4-methylbenzyl)phosphonate are more preferred.

The catalyst is used in a manner such that the amount of the metal component in the catalyst is adjusted to preferably 0.001 ppm to 1000 ppm, more preferably 0.01 ppm to 100 ppm, and particularly preferably 0.1 ppm to 100 ppm relative to the theoretically produced amount of resin. In the Examples described later, the catalyst was added in a manner such that the amount of Al element was adjusted to 6.5 ppm and the amount of P element was adjusted to 13.5 ppm.

In the melt polycondensation method, using the aforementioned raw materials and catalyst, melt polycondensation is carried out while removing a by-product by means of the transesterification reaction under heating conditions and under ordinary pressure or reduced pressure.

Specifically, the reaction is performed at 120 to 260°C, and preferably 180 to 260°C, and for 0.1 to 5 hours, and preferably 0.5 to 3 hours. Subsequently, the pressure reducing degree of the reaction system is increased while increasing the reaction temperature to react the diol compounds with the carbonic acid diester, and finally, a polycondensation reaction is performed under a reduced pressure of 1 mmHg or less at 200 to 350°C for 0.05 to 2 hours. The reaction may be either a continuous type or a batch type. The reaction apparatus to be used for performing the reaction may be a vertical apparatus equipped with an anchor type stirring blade, maxblend stirring blade, helicalribbon type stirring blade or the like, or a horizontal apparatus equipped with a paddle blade, lattice blade, spectacle-shaped blade or the like, or an extruder-type apparatus equipped with a screw. Further, in consideration of the viscosity of a polymerized product, use of a reaction apparatus in which the above-described reaction apparatuses are appropriately combined is suitably carried out.

In the method for producing the polyester carbonate resin in the present invention, after the polymerization reaction is completed, in order to maintain thermal stability and hydrolytic stability, the catalyst may be removed or deactivated. In general, a method for deactivating a catalyst by means of addition of a publicly-known acidic substance is suitably carried out. As such substances, specifically, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl

phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenyl phosphine and bis(diphenylphosphino)ethane; boric acids such as boric acid and phenylboric acid; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are suitably used. From the viewpoint of the deactivating effect, color phase of the resin and stability, aromatic sulfonates such as dodecylbenzenesulfonic acid tetrabutylphosphonium salt are preferably used. These deactivating agents are used in an amount of 0.01 to 50 times, and preferably 0.3 to 20 times the molar quantity of the catalyst. When the amount is less than 0.01 times the molar quantity of the catalyst, the deactivating effect is insufficient and therefore it is undesirable. When the amount is more than 50 times the molar quantity of the catalyst, heat resistance is reduced and a molded body tends to be easily colored, and therefore it is undesirable.

After the catalyst is deactivated, a process of devolatilizing and removing a low boiling point compound in the polymer under a pressure of 0.1 to 1 mmHg and at a temperature of 200 to 350°C may be carried out. In this process, a horizontal apparatus equipped with a stirring blade having excellent surface renewal ability such as a paddle blade, a lattice blade and a spectacle-shaped blade, or a thin film evaporator is suitably used.

It is desired that the content of foreign materials in the polyester carbonate resin in the present invention is as small as possible, and filtration of a melting raw material and filtration of a catalyst solution are suitably carried out. The mesh of the filter is preferably 5 μm or less, and more preferably 1 μm or less. Moreover, filtration of the produced resin using a polymer filter is suitably carried out. The mesh of the polymer filter is preferably 100 μm or less, and more preferably 30 μm or less. Further, the process of obtaining a resin pellet should definitely be carried out in a low-dust environment, which is preferably Class 1000 or lower, and more preferably Class 100 or lower.

(C) Higher Alcohol Fatty Acid Ester

The polyester carbonate resin composition of the present invention includes the above-described polyester carbonate resin and a higher alcohol fatty acid ester.

The higher alcohol fatty acid ester to be used in the present invention means a fatty acid ester of a monohydric alcohol having 6 or more carbon atoms. The lower limit of the carbon number is preferably 10 or more, and more preferably 15 or more, and the upper limit of the carbon number is preferably 24 or less, and more preferably 20 or less. Preferred specific examples of the higher alcohol fatty acid ester include stearyl stearate, 2-ethylhexyl octadecanoate, cetyl 2-ethylhexanoate, and ethylhexyl palmitate, and stearyl stearate is particularly preferably used.

Examples of stearyl stearate include RIKEMAL SL-800 (manufactured by Riken Vitamin Co., Ltd.), RIKEMAL SL-900 (manufactured by Riken Vitamin Co., Ltd.), and RIKEMAL SL-900A (manufactured by Riken Vitamin Co., Ltd.).

The amount of the higher alcohol fatty acid ester is preferably 100 to 10,000 ppm, more preferably 100 to 5,000 ppm, and particularly preferably 500 to 5,000 ppm relative to the polyester carbonate resin.

To the polyester carbonate resin composition of the present invention, a mold release agent other than the higher alcohol fatty acid ester, an antioxidant, a catalyst deactivator, an ultraviolet absorber, a flowability improving agent, a crystal nucleating agent, a toughening agent, a dye, an antistatic agent, an antimicrobial agent or the like can be added.

(D) Physical Properties of Polyester Carbonate Resin Composition

The polyester carbonate resin composition of the present invention is excellent in at least one of the dimensional change rate (%), water absorption rate (%), YI, haze (%), and transmittance (%).

In the present invention, the physical properties of the polyester carbonate resin composition can be measured by the methods described in the Examples which will be described later.

The upper limit of the dimensional change rate (%) of the polyester carbonate resin composition of the present invention (in both MD and TD) is preferably 0.5% or less, more preferably 0.3% or less, and particularly preferably 0.1% or less. The lower limit of the dimensional change rate (%) is preferably 0% or more, more preferably 0.001% or more, even more preferably 0.01% or more, and particularly preferably 0.05% or more. By setting the dimensional change rate within the above-described range, the combination (unitization) with a lens obtained from another type of resin is facilitated, and moreover, when used as a lens, changes in lens performance due to external environment can be reduced. Note that MD means Machine Direction (flow direction), and TD means Transverse Direction (vertical direction).

The upper limit of the water absorption rate (%) of the polyester carbonate resin composition of the present invention is preferably 1% by mass or less, more preferably 0.7% by mass or less, and particularly preferably 0.5% by mass or less. The lower limit of the water absorption rate (%) is preferably 0% by mass or more, more preferably 0.1% by mass or more, and particularly preferably 0.3% by mass or more. By setting the water absorption rate within the above-described

range, water absorption expansion is prevented, and the combination (unitization) with a lens obtained from another type of resin (e.g., a cycloolefin polymer) is facilitated.

YI of the polyester carbonate resin composition of the present invention is preferably 3 to 60, more preferably 10 to 50, and particularly preferably 20 to 40. When it is within the above-described range, it is preferred for use as an optical lens.

The haze (%) of the polyester carbonate resin composition of the present invention is preferably 0.2 to 6.0, more preferably 0.5 to 5.0, and particularly preferably 0.5 to 3.0. When it is within the above-described range, it is preferred for use as an optical lens.

The transmittance (%) at 450 nm of the polyester carbonate resin composition of the present invention is preferably 40% to 99%, more preferably 45% to 90%, even more preferably 50% to 80%, and particularly preferably 50% to 70%.

(D) Optical Lens

An optical lens produced by using the polyester carbonate resin composition of the present invention has a high refractive index and excellent heat resistance, and therefore can be used in the field in which expensive glass lenses having a high refractive index have been conventionally used including telescopes, binoculars and television projectors and is very useful. The optical lens is preferably used in the form of an aspherical lens according to need. In the case of the aspherical lens, since the spherical aberration can be adjusted to be substantially zero by one lens, it is not necessary to remove the spherical aberration by combining a plurality of spherical lenses, and reduction in weight and reduction in the production cost can be carried out. Accordingly, the aspherical lens is particularly useful as a camera lens among optical lenses.

Further, the optical lens is molded by any method such as the injection molding method, the compression molding method, and the injection compression molding method. According to the present invention, an aspherical lens having a high refractive index and low birefringence, which is technically difficult to obtain by processing a glass lens, can be more conveniently obtained.

In order to avoid mixing of a foreign material in the optical lens as much as possible, the molding environment must be a low-dust environment, and it is preferably Class 6 or lower, and more preferably Class 5 or lower.

(E) Optical Film

An optical film produced by using the polyester carbonate resin composition of the present invention has excellent transparency and heat resistance, and therefore is suitably used for a film for liquid crystal substrates, an optical memory card, etc.

In order to avoid mixing of a foreign material in the optical film as much as possible, the molding environment must be a low-dust environment, and it is preferably Class 6 or lower, and more preferably Class 5 or lower.

EXAMPLES

Hereinafter, the present invention will be specifically described by way of examples, but the present invention is not limited thereto. Note that measurement values in the Examples were measured using the below-described methods and apparatuses.

1) Dimensional Change Rate (%)

A polycarbonate resin was dried at 120°C for 8 hours and then injection molded to obtain a disk-like test piece having a diameter of 50 mm and a thickness of 2 mm.

Molding machine: Injection Molding Machine S-2000i30A (30 tons) manufactured by FANUC Corporation

Molding conditions:

Cylinder temperature: Tg of polycarbonate resin + 135°C
Mold temperature: Tg of polycarbonate resin - 15°C

The length from the molding gate opening to the opposite gate opening of the obtained test piece was measured with an image dimension measuring machine and designated as Lm0. Next, the test piece was stored for 72 hours in a constant-temperature and high-humidity machine in which the temperature was set at 85°C and the humidity was set at 85%, and after that, the length from the molding gate opening to the opposite gate opening of the test piece was measured with the image dimension measuring machine and designated as Lm. The dimensional change rate (%, MD) was

calculated according to the following formula.

$$\text{Dimensional change rate (\%, MD)} = (\text{Lm-Lm0})/\text{Lm0}\times 100$$

Lm: Length from the molding gate opening to the opposite gate opening of the test piece after stored for 72 hours at temperature of 85°C and humidity of 85%
Lm0: Length from the molding gate opening to the opposite gate opening of the test piece before stored for 72 hours at temperature of 85°C and humidity of 85%

A test piece was obtained in the same manner as that for the aforementioned dimensional change rate (%, MD), and the length of the longest part in the direction perpendicular to the aforementioned Lm0 was measured with the image dimension measuring machine and designated as Lt0. Next, the test piece was stored for 72 hours in the constant-temperature and high-humidity machine in which the temperature was set at 85°C and the humidity was set at 85%, and after that, the length of the longest part in the direction perpendicular to the aforementioned Lm was measured with the image dimension measuring machine and designated as Lt. The dimensional change rate (%, TD) was calculated according to the following formula.

$$\text{Dimensional change rate (\%, TD)} = (\text{Lt-Lt0})/\text{Lt0}\times 100$$

Lt: Length of the longest part in the direction perpendicular to the aforementioned Lm
Lt0: Length of the longest part in the direction perpendicular to the aforementioned Lm0
Image dimension measuring machine: Image Dimension Measuring Machine Head LM-1100 manufactured by Keyence Corporation

2) Water Absorption Rate (% by mass)

The measurement was carried out according to the method of JIS K7209. Specifically, a test piece having a diameter of 50 mm and a thickness of 3 mm obtained by injection molding was dried at 50°C for 24 hours using a hot air dryer. After that, the mass of the test piece was measured and designated as M0. Next, the test piece was immersed in water whose temperature was controlled to 23°C±2°C (21°C to 25°C). After 24 hours, the test piece was taken out, and water adhering to the surface was wiped off. Then the mass was measured and designated as Mt. The water absorption rate (%) was calculated according to the formula below.

$$\text{Water absorption rate (\% by mass)}=(\text{Mt-M0})/\text{M0}\times 100$$

Note that the mass measurement was carried out in an environment in which the temperature was controlled to 23°C±2°C (21°C to 25°C).

3) YI and Haze (%)

The obtained resin was molded to have a thickness of 3 mm, and YI and the haze were measured using a spectroscopic haze meter. YI and the haze are values obtained in accordance with JIS K 7373:2006 and JIS K-7136:2000, respectively.
Measurement apparatus: "SH 7000" manufactured by Nippon Denshoku Industries Co., Ltd.

4) Transmittance (%) at 450 nm

The obtained resin was molded to have a thickness of 3 mm, and the transmittance was measured using a spectroscopic haze meter in accordance with JIS K 7361-1:1997, and the value at 450 nm was obtained.
Measurement apparatus: "SH 7000" manufactured by Nippon Denshoku Industries Co., Ltd.

(Polymerization Example 1)

As raw materials, 7500.0 g (12.0 mol) of 6,6'-di-(2-naphthyl)-2,2'-bis-(2-hydroxyethoxy)-1,1'-binaphthyl (2DNBINOL-2EO) represented by a structural formula below, 4958.2 g (9.2 mol) of 9,9-bis[6-(2-hydroxyethoxy)-2-naphthyl]fluorene (BNEF) represented by a structural formula below, 838.1 g (4.1 mol) of 1,12-dodecanediol (C12-diol) represented

by a structural formula below, 8334.2 g (20.7 mol) of 2,2'-([1,1'-binaphthalene]-2,2'-diylbis(oxy))acetoacetic acid (BINOL-DC) represented by a structural formula below, and 1167.4 g (5.4 mol) of diphenyl carbonate (DPC), and as catalysts, 1.68 g of tris(2,4-pentanedionato)aluminum(III) and 2.1 mL of diethyl (4-methylbenzyl)phosphonate, were put into a 50 L reactor equipped with a stirrer and a distillation apparatus, and substitution with nitrogen was carried out.

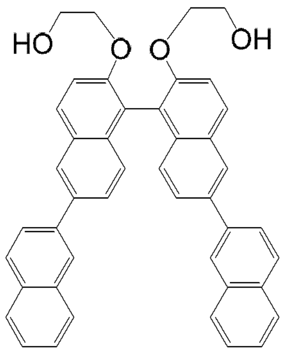

2DNBINOL-2EO

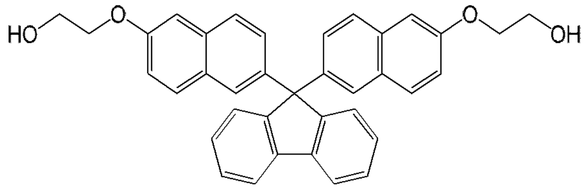

BNEF

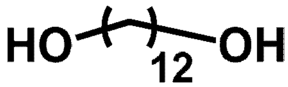

C12-diol

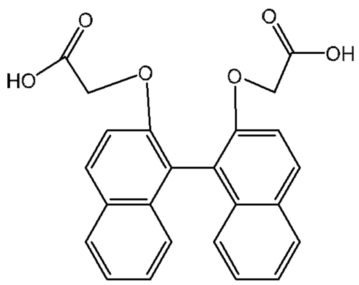

BINOL-DC

The mixture was heated to 200°C over 20 minutes under nitrogen atmosphere (760 Torr) and stirred. After the pressure reducing degree was adjusted to 300 Torr over 20 minutes, the temperature was increased to 240°C over 40 minutes, and conditions were kept at 240°C and 300 Torr for 10 minutes to perform a transesterification reaction. The pressure was returned to ordinary pressure with nitrogen gas, a trap was replaced, and then the conditions were adjusted to 240°C and 300 Torr again and kept for 10 minutes. After that, the temperature was increased to 250°C over 70 minutes, while the pressure reducing degree was adjusted to 50 Torr over 50 minutes. Further, the pressure reducing degree was adjusted to 1 Torr or less over 20 minutes, and stirring was performed under conditions of 250°C and 1 Torr or less for 30 minutes to perform a polymerization reaction. After the reaction was completed, nitrogen was introduced into the reaction system in the reactor to increase the pressure, and a polyester carbonate resin produced was taken out therefrom while being pelletized to obtain a polyester carbonate resin (PEC1).

(Example 1)

To the polyester carbonate resin (PEC1) obtained in Polymerization Example 1, 3,9-bis(2,6-di-tert-butyl-4-methylphenoxy)-2,4,8,10-tetraoxa-3,9-diphosphaspiro[5.5]undecane (ADK STAB PEP-36 manufactured by ADEKA Corporation) (300 ppm relative to the polyester carbonate resin);

pentaerythritol tetrakis[3-(3,5-di-tert-butyl-4-hydroxyphenyl)propionate] (ADK STAB AO-60 manufactured by ADEKA Corporation) (1000 ppm relative to the polyester carbonate resin);
stearyl stearate (RIKEMAL SL-800 manufactured by Riken Vitamin Co., Ltd.) (1500 ppm relative to the polyester carbonate resin);
dodecylbenzenesulfonic acid tetrabutylphosphonium salt (MGA-614 manufactured by TAKEMOTO OIL & FAT CO., LTD.) (15 ppm relative to the polyester carbonate resin); and
a mixture of a 3,4-dimethyl body and a 2,4-dimethyl body shown below (90:10, manufactured by Tokyo Chemical Industry Co., Ltd.) (200 ppm relative to the polyester carbonate resin)
were added, and the mixture was kneaded by a twin screw extruder to obtain a resin composition. Physical properties of the obtained resin composition are shown in Table 2.

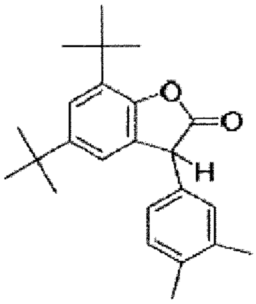
90%
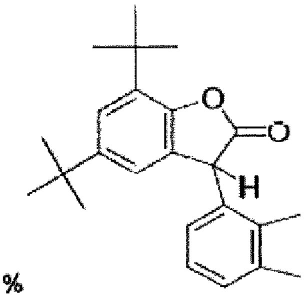
10%

Details regarding extrusion are as described below.
Twin screw extruder: TEM-18SS manufactured by SHIBAURAMACHINE CO., LTD.

Resin temperature: 260°C
Screw rotation speed: 200 rpm

(Example 2)

A resin composition was obtained in a manner similar to that in Example 1, except that stearyl stearate was used in an amount of 3000 ppm relative to the polyester carbonate resin. Physical properties of the obtained resin composition are shown in Table 2.

(Comparative Example 1)

A resin composition was obtained in a manner similar to that in Example 1, except that "stearyl stearate (RIKEMAL SL-800 manufactured by Riken Vitamin Co., Ltd.) (1500 ppm relative to the polyester carbonate resin)" was changed to "glycerin monostearate (monoglyceride stearate, RIKEMAL S-100A manufactured by Riken Vitamin Co., Ltd.) (1500 ppm relative to the polyester carbonate resin)". Physical properties of the obtained resin composition are shown in Table 2.

(Comparative Example 2)

A resin composition was obtained in a manner similar to that in Example 1, except that "stearyl stearate (RIKEMAL SL-800 manufactured by Riken Vitamin Co., Ltd.) (1500 ppm relative to the polyester carbonate resin)" was changed to "glycerin monostearate (monoglyceride stearate, RIKEMAL S-100A manufactured by Riken Vitamin Co., Ltd.) (3000 ppm relative to the polyester carbonate resin)". Physical properties of the obtained resin composition are shown in Table 2.

Table 2

| | | | Example 1 | Example 2 | Comparative Example 1 | Comparative Example 2 |
|---|---|---|---|---|---|---|
| Resin type | | | PEC1 | PEC1 | PEC1 | PEC1 |
| Additives [ppm] | Antioxidant | AO-60 | 1000 | 1000 | 1000 | 1000 |
| | | PEP-36 | 300 | 300 | 300 | 300 |
| | | MIP-004 | 200 | 200 | 200 | 200 |
| | Mold release agent | S-100A | 0 | 0 | 1500 | 3000 |
| | | SL-800 | 1500 | 3000 | 0 | 0 |
| | Catalyst deactivator | MGA-614 | 15 | 15 | 15 | 15 |
| Physical properties | Dimensional change rate | MD (%) | 0.072 | 0.079 | 0.084 | 0.087 |
| | | TD (%) | 0.072 | 0.079 | 0.084 | 0.087 |
| | Water absorption rate (%) | | 0.5 | 0.5 | 0.6 | 0.6 |
| | YI | | 31 | 31 | 30 | 30 |
| | Haze (%) | | 1.0 | 1.0 | 1.1 | 1.2 |
| | Transmittance (%) at 450 nm | | 58 | 59 | 59 | 59 |

## Claims

**1.** A polyester carbonate resin composition, which comprises:

a polyester carbonate resin comprising

a structural unit (A) that is represented by general formula (1),
a structural unit (B) that is derived from at least one compound selected from the group consisting of 1,5-pentanediol, 1,6-hexanediol, 1,7-heptanediol, 1,8-octanediol, 1,10-decanediol, and 1,12-dodecanediol (C12-diol), and
a structural unit (i) that is derived from a dicarboxylic acid or a carboxylic acid diester represented by general formula (I); and

a higher alcohol fatty acid ester:

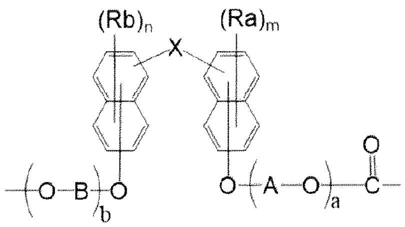 (1)

wherein in formula (1):

X represents a single bond or a fluorene group;
when X is a single bond, $R_a$ and $R_b$ are each independently selected from a halogen atom; an alkyl group having 1 to 20 carbon atoms; an alkoxyl group having 1 to 20 carbon atoms; a cycloalkyl group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and $-C \equiv C-R_h$;
when X is a fluorene group, $R_a$ and $R_b$ are each independently selected from a hydrogen atom; a halogen atom; an alkyl group having 1 to 20 carbon atoms; an alkoxyl group having 1 to 20 carbon atoms; a cycloalkyl

group having 5 to 20 carbon atoms; a cycloalkoxyl group having 5 to 20 carbon atoms; an aryl group having 6 to 20 carbon atoms; a heteroaryl group having 6 to 20 carbon atoms or an aryloxy group having 6 to 20 carbon atoms, which contains at least one heterocyclic atom selected from O, N and S; and -C≡C-$R_h$;
$R_h$ represents an aryl group having 6 to 20 carbon atoms, or a heteroaryl group having 6 to 20 carbon atoms which contains at least one heterocyclic atom selected from O, N and S;
A and B each independently represent an alkylene group having 1 to 4 carbon atoms;
m and n each independently represent an integer of 1 to 6; and
a and b each independently represent an integer of 0 to 10,

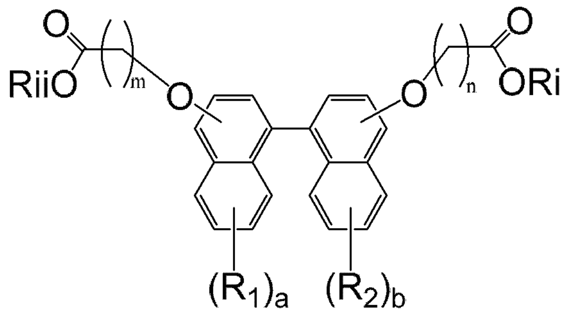
(I)

wherein in formula (I):

$R_1$ and $R_2$ each independently represent a hydrogen atom; a fluorine atom; a chlorine atom; a bromine atom; an iodine atom; an alkyl group having 1 to 6 carbon atoms; or an aryl group having 6 to 20 carbon atoms, an alkenyl group having 2 to 6 carbon atoms, an alkoxy group having 1 to 6 carbon atoms, or an aralkyl group having 7 to 17 carbon atoms, which may contain a heterocyclic atom selected from O, N and S;
a and b each independently represent an integer of 0 to 5;
n and m each independently represent an integer of 1 to 5; and
$R_i$ and $R_{ii}$ each independently represent a hydrogen atom, or an alkyl group having 1 to 5 carbon atoms.

**2.** The polyester carbonate resin composition according to claim 1, wherein a molar ratio between the structural unit (A) and the structural unit (B) (A/B) is 99.9/0.1 to 0.1/99.9.

**3.** The polyester carbonate resin composition according to claim 1 or 2, wherein the polyester carbonate resin further comprises a structural unit (C) represented by general formula (3):

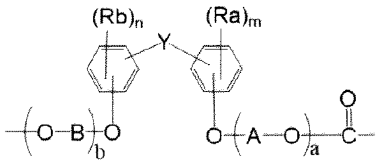
(3)

wherein in formula (3):

$R_a$ and $R_b$ each independently represent a halogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, or an aryl group having 6 to 20 carbon atoms;
Y represents -O-, -S-, -SO-, -$SO_2$-, -CO-, a cycloalkylene group having 6 to 12 carbon atoms, or a divalent group represented by general formula (4) or general formula (5), and the cycloalkylene group may be substituted with 1 to 12 alkyl groups having 1 to 3 carbon atoms;
A and B each independently represent an alkylene group having 1 to 4 carbon atoms;
m and n each independently represent an integer of 0 to 4; and
a and b each independently represent an integer of 1 to 10,

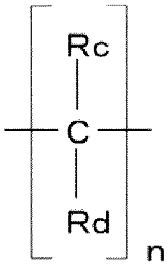

(4)

wherein in formula (4):

$R_c$ and $R_d$ are each independently selected from the group consisting of a hydrogen atom, a halogen atom, an alkyl group having 1 to 20 carbon atoms, an alkoxy group having 1 to 5 carbon atoms, an aryl group having 6 to 12 carbon atoms, an aralkyl group having 7 to 17 carbon atoms, and an alkenyl group having 2 to 15 carbon atoms;
each of the alkyl group, the alkoxy group, the aryl group, the aralkyl group and the alkenyl group of $R_c$ and $R_d$ may have a substituent, and $R_c$ and $R_d$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent; and
n represents an integer of 0 to 20,

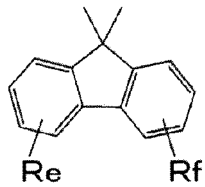

(5)

wherein in formula (5):

$R_e$ and $R_f$ are each independently selected from the group consisting of a hydrogen atom, a halogen atom, an alkyl group having 1 to 20 carbon atoms, an alkoxy group having 1 to 7 carbon atoms, an aryl group having 6 to 12 carbon atoms, an aralkyl group having 7 to 17 carbon atoms, and an alkenyl group having 2 to 15 carbon atoms, and each of the alkyl group, the alkoxy group, the aryl group, the aralkyl group, and the alkenyl group may have a substituent; and
$R_e$ and $R_f$ may be bonded to each other so as to form a carbocyclic ring having 3 to 20 carbon atoms or a heterocyclic ring having 1 to 20 carbon atoms, and each of the carbocyclic ring and the heterocyclic ring may have a substituent.

4. The polyester carbonate resin composition according to claim 3, wherein Y in general formula (3) is a fluorene group.

5. The polyester carbonate resin composition according to any one of claims 1 to 4, wherein the polyester carbonate resin further comprises a structural unit (D) represented by general formula (6):

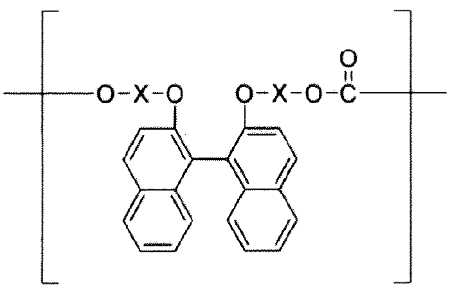

(6)

wherein in formula (6), X represents an alkylene group having 1 to 4 carbon atoms.

6. The polyester carbonate resin composition according to any one of claims 1 to 5, wherein a monomer constituting the

structural unit (A) represented by general formula (1) comprises at least one of monomers represented by structural formulae below:

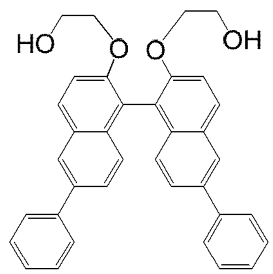

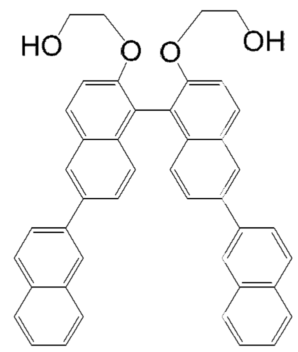

DPBHBNA 2DNBINOL-2EO

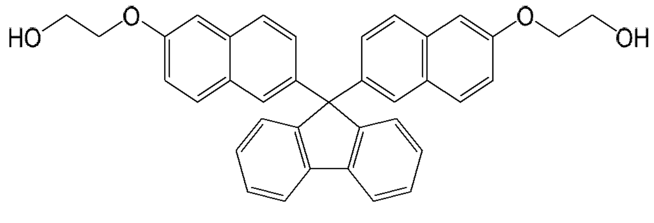

BNEF

7. The polyester carbonate resin composition according to any one of claims 1 to 6, wherein the dicarboxylic acid or the carboxylic acid diester represented by general formula (I) comprises at least one of a dicarboxylic acid and a carboxylic acid diester represented by structural formulae below:

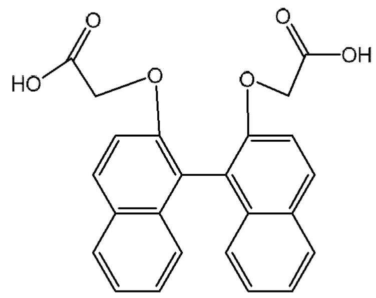

BINOL-DC

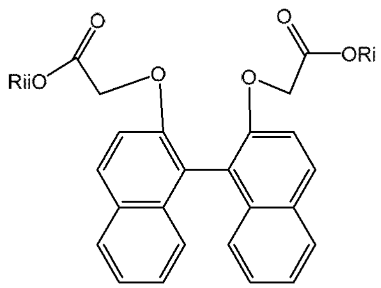

wherein in formulae, $R_i$ and $R_{ii}$ each independently represent an alkyl group having 1 to 5 carbon atoms.

8. The polyester carbonate resin composition according to claim 3 or 4, wherein a monomer constituting the structural unit (C) represented by general formula (3) comprises at least one of monomers represented by structural formulae below:

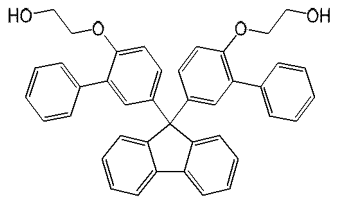

BPPEF

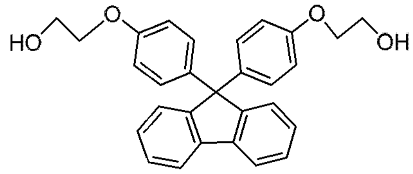

BPEF

**9.** The polyester carbonate resin composition according to claim 5, wherein a monomer constituting the structural unit (D) represented by general formula (6) is a monomer represented by structural formula below:

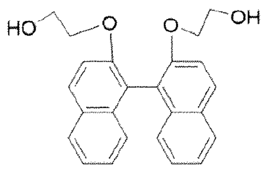

BNE

**10.** An optical lens comprising the polyester carbonate resin composition according to any one of claims 1 to 9.

**11.** An optical film comprising the polyester carbonate resin composition according to any one of claims 1 to 9.

**INTERNATIONAL SEARCH REPORT**

International application No.
**PCT/JP2024/016751**

**A. CLASSIFICATION OF SUBJECT MATTER**

***C08L 67/00***(2006.01)i; ***C08G 63/64***(2006.01)i; ***C08K 5/10***(2006.01)i; ***C08L 69/00***(2006.01)i; ***G02B 1/04***(2006.01)i
FI: C08L67/00; C08G63/64; C08K5/10; C08L69/00; G02B1/04

According to International Patent Classification (IPC) or to both national classification and IPC

**B. FIELDS SEARCHED**

Minimum documentation searched (classification system followed by classification symbols)

C08L67/00; C08G63/64; C08K5/10; C08L69/00; G02B1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2021/014962 A1 (TEIJIN LIMITED) 28 January 2021 (2021-01-28)<br>entire text | 1-11 |
| A | WO 2019/176874 A1 (TEIJIN LIMITED) 19 September 2019 (2019-09-19)<br>entire text | 1-11 |
| A | WO 2019/131841 A1 (TEIJIN LIMITED) 04 July 2019 (2019-07-04)<br>entire text | 1-11 |
| A | WO 2018/016516 A1 (MITSUBISHI GAS CHEMICAL CO., INC.) 25 January 2018 (2018-01-25)<br>entire text | 1-11 |
| A | WO 2014/073496 A1 (MITSUBISHI GAS CHEMICAL CO., INC.) 15 May 2014 (2014-05-15)<br>entire text | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 July 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/016751

C. DOCUMENTS CONSIDERED TO BE RELEVANT

| Category* | Citation of document, with indication, where appropriate, of the relevant passages | Relevant to claim No. |
|---|---|---|
| P, A | WO 2023/085341 A1 (MITSUBISHI GAS CHEMICAL CO., INC.) 19 May 2023 (2023-05-19)<br>entire text | 1-11 |

Form PCT/ISA/210 (second sheet) (July 2022)

**INTERNATIONAL SEARCH REPORT**
**Information on patent family members**

International application No.
**PCT/JP2024/016751**

| Patent document cited in search report | Publication date (day/month/year) | Patent family member(s) | Publication date (day/month/year) |
|---|---|---|---|
| WO 2021/014962 A1 | 28 January 2021 | CN 114375313 A | |
| | | TW 202122455 A | |
| WO 2019/176874 A1 | 19 September 2019 | US 2021/0002420 A1 claims, examples | |
| | | EP 3766913 A1 | |
| | | CN 111655754 A | |
| | | TW 201938635 A | |
| WO 2019/131841 A1 | 04 July 2019 | US 2021/0371650 A1 claims, examples | |
| | | EP 3733734 A1 | |
| | | CN 111527125 A | |
| | | TW 201930395 A | |
| WO 2018/016516 A1 | 25 January 2018 | US 2019/0241703 A1 claims, examples | |
| | | EP 3489279 A1 | |
| | | CN 113667109 A | |
| | | TW 201815883 A | |
| WO 2014/073496 A1 | 15 May 2014 | US 2015/0285954 A1 claims, examples | |
| | | EP 2918621 A1 | |
| | | CN 104769007 A | |
| | | TW 201431903 A | |
| WO 2023/085341 A1 | 19 May 2023 | TW 202328275 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 201473496 A
- JP H0570584 A
- JP H0269520 A
- JP H05341124 A